# EUROPÄISCHE PATENTSCHRIFT

(11) **EP 1 644 654 B1**
(45) Veröffentlichungstag und Bekanntmachung des Hinweises auf die Patenterteilung: **13.09.2006**
(21) Anmeldenummer: 04739186.7
(22) Anmeldetag: 12.05.2004
(51) Int. Cl.: F16K 15/04, F16K 27/02

(54) **EINSCHRAUBBARES RÜCKSCHLAGVENTIL**
SCREWABLE CHECK VALVE
CLAPET DE NON-RETOUR VISSABLE

(30) Priorität: 16.07.2003 DE 10332347
(43) Veröffentlichungstag der Anmeldung: 12.04.2006
(73) Patentinhaber: Brueninghaus Hydromatik GmbH, 89275 Elchingen (DE)
(72) Erfinder: KREBS, Clemens, 72074 Tübingen (DE); DREHER, Herbert, 72160 Horb (DE)
(74) Vertreter: Körfer, Thomas
(86) Internationale Anmeldenummer: PCT/EP2004/005100
(87) Internationale Veröffentlichungsnummer: WO 2005/008110

(56) Entgegenhaltungen:
- DE-A- 2 449 443
- DE-U- 8 801 759
- DE-U- 29 620 916
- US-A- 2 912 001
- US-A- 4 977 927

## Beschreibung

Die Erfindung betrifft ein Rückschlagventil, das in eine ein Hydraulikfluid führende Druckleitung mit Gewinde einschraubbar ist.

Eine vergleichsweise einfache und sichere Befestigung eines Rückschlagventils in einer Druckleitung erfolgt mittels Verschraubung. Hierzu wird das Rückschlagventil mit seinem am Ventilgehäuse vorgesehenen Außengewinde in das in der Druckleitung angebrachte Innengewinde eingefügt.

Die Verschraubung bewirkt sowohl eine formschlüssige als auch kraftschlüssige Verbindung zwischen dem Rückschlagventil und der Druckleitung. Eine zusätzliche Abdichtung mittels Dichtringen (z. B. O-Ringe) entfällt in diesem Fall. Die Montage wie auch Demontage gestaltet sich auch vergleichsweise einfach. Zusätzliche Bauteile wie beispielsweise Schrauben sind für die Befestigung des Rückschlagventils in der Druckleitung nicht erforderlich. Durch Anbringung geeigneter Angriffsflächen am Rückschlagventil, die den Normmaßen von Schraubwerkzeugen entsprechen, kann das Rückschlagventil mit einem Standard-Schraubwerkzeug relativ einfach in der Druckleitung befestigt und auch wieder entfernt werden.

Die konstruktiven Anforderungen eines einschraubbaren Rückschlagventils liegen vor allem in einer kompakten Bauweise des Rückschlagventils in axialer und radialer Richtung bei Vorhaltung eines möglichst großen Strömungsquerschnitts für den Betriebsfall des geöffneten Rückschlagventils. Gerade die Anbringung des Außengewindes am Ventilgehäuse beansprucht ein gewisses zusätzliches Bauvolumen am Gesamtvolumen des Rückschlagventils, das entweder zu einer Vergrößerung des Gesamtvolumens des Rückschlagventils in radialer Richtung und eventuell auch in axialer Richtung führt oder das den noch vorhandenen Raum zur Ausbildung des Strömungskanals und damit den Strömungsquerschnitt innerhalb des Rückschlagventils unnötig reduziert.

Das in der DE 8801759U offenbarte federbelastete Sperrventil besteht aus einem Ventilgehäuse mit Außengewinde, das in das Innengewinde einer Hydraulikleitung einschraubbar ist.

In der DE 24 49 443 A1 ist ein einschraubbares Rückschlagventil dargestellt, dessen Ventilgehäuse einen vergleichsweise großen Raum in radialer Richtung ausfüllt. Dies beruht auf der Tatsache, dass sich der Durchmesser des Ventilgehäuses aufgrund der Anordnung der einzelnen Funktionseinheiten im ungünstigsten Fall aus den Querschnitten des Außengewindes, des Ventilgehäuseabschnitts des Ventilgehäuses, des Ventilkörper und des Strömungskanals zwischen dem Ventilgehäuseabschnitt und dem Ventilkörper zusammensetzt, die jeweils entsprechend ihrer Funktion geeignet dimensioniert sind.

Auch in axialer Richtung weist das Rückschlagventil der DE 24 49 443 A1 eine vergleichsweise große Ausdehnung auf. Die vergleichsweise große axiale Ausdehnung ergibt sich aus der Addition der Geometrie der axial angeordneten Funktionseinheiten des Ventilsitzkörper, des Ventilkörpers und der Spannfeder sowie eines zusätzlichen Raumes für ein Schraubwerkzeug, das jeweils an den Innenflächen und des Ventilgehäuses zur Verschraubung des Rückschlagventils angreift.

Der Erfindung liegt daher die Aufgabe zugrunde, das Rückschlagventil mit den Merkmalen gemäß dem Oberbegriff von Anspruch 1 derart weiterzubilden, dass durch eine neue konstruktive Anordnung und geometrische Ausgestaltung der einzelnen für ein Rückschlagventil notwendigen Funktionseinheiten eine sehr kompakte Bauweise des Rückschlagventils in radialer und axialer Richtung erreicht wird, gleichzeitig ein ausreichend großer Strömungsquerschnitt des Strömungskanals vorgehalten wird, und zur Erhöhung der Funktionssicherheit die Feder nicht im Strömungsbereich angeordnet ist.

Die Aufgabe der Erfindung wird durch eine Hydraulische Baugruppe mit den Merkmalen des Anspruchs 1 gelöst.

Der Strömungskanal wird gemäß Anspruch 1 durch Ausbildung eines Durchlaßkanals mittels Abtragung der Mantelfläche des Ventilgehäuses für die Hydraulikfluidströmung in den Bauraum des Außengewindes und darüber hinaus teilweise in den innerhalb des Außengewinde befindlichen Bauraum des Ventilgehäuses verlagert. Auf diese Weise ist kein zusätzlicher Bauraum für den Strömungskanal in radialer Richtung des Ventilgehäuses vorzusehen, was die Ausdehnung des Rückschlagventils in radialer Richtung deutlich reduziert.

Vorteilhafte Ausgestaltungen der Erfindung sind in den abhängigen Ansprüchen angegeben.

Indem der Strömungskanal gemäß Anspruch 2 über drei, auf der Manteloberfläche des Ventilgehäuses gleichmäßig verteilte Durchlaßkanäle realisiert wird, wird der Strömungskanalquerschnitt zusätzlich erhöht und ein Strömungsprofil innerhalb des Rückschlagventils erzeugt, das der laminaren Strömung in dem dem Rückschlagventil vor- und nachgelagerten Bereich der Druckleitung angenähert ist.

Das Außengewinde am Ventilgehäuse erstreckt sich nur über einen begrenzten Zylinderabschnitt des hohlzylindrischen Ventilgehäuses. Von daher steht an der äußeren Mantelfläche des Ventilgehäuses genügend Freiraum zur Anbringung von Angriffsflächen für ein Schraubwerkzeug zum Einschrauben des Rückschlagventils in das Innengewinde der Druckleitung zur Verfügung. Diese ebenfalls durch Abtragung der Mantelfläche des Ventilgehäuses erzeugten Angriffsflächen sind in axialer Richtung auf Höhe der Feder bzw. des Federtellers am Ventilgehäuse angebracht und benötigen deshalb keine zusätzliche axiale Erweiterung des Ventilgehäuses des Rückschlagventils wie im Falle der Angriffsflächen im Rückschlagventil der DE 24 49 443 A1.

Auf diese Weise ist durch konstruktive Umgestaltung des Rückschlagventils ein in axialer wie auch radiale Richtung kompaktes Ventilgehäuse realisiert, das einen Strömungskanal mit ausreichend großem Strömungsquerschnitt und quasi-laminaren Strömungsprofil aufweist.

Ein Ausführungsbeispiel der Erfindung ist in der Zeichnung dargestellt und nachfolgend näher beschrieben. Es zeigen:
- Fig. 1: eine Querschnittdarstellung eines Druckleitungssystems mit einem in eine Gewindebohrung eingeschraubten, erfindungsgemäßen Rückschlagventil;
- Fig. 2: eine dreidimensionale Darstellung eines erfindungsgemäßen Rückschlagventils und
- Fig. 3: einen Querschnitt eines erfindungsgemäßen Rückschlagventils.

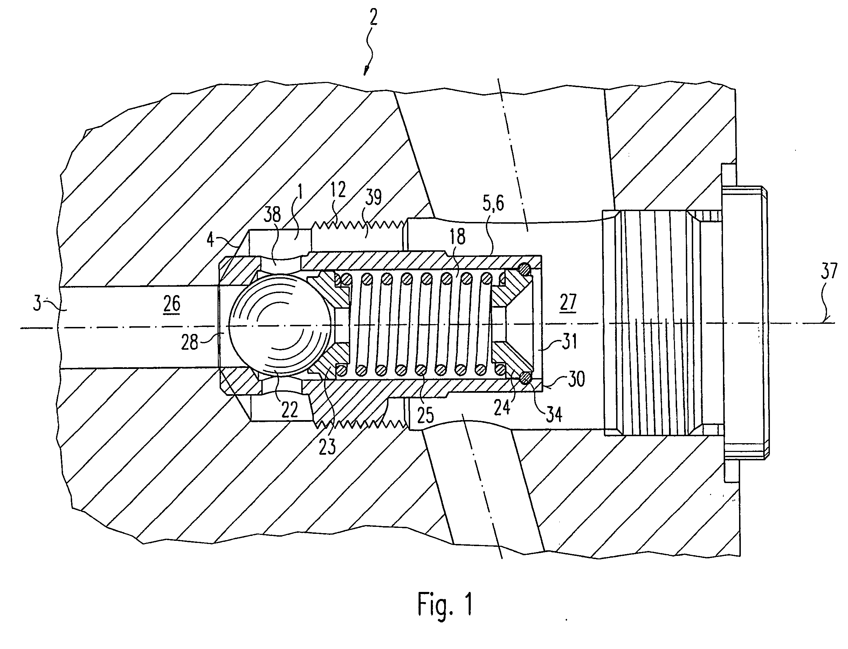

Das erfindungsgemäße Rückschlagventil wird nachfolgend unter Bezugnahme auf Fig. 1 bis Fig. 3 beschrieben.

Die Gewindebohrung 1, die sich gemäß Fig. 1 im Gehäuse 2 einer hydraulischen Baugruppe, beispielsweise einer Axialkolbenmaschine, befindet, weist ein Innengewinde 12 auf. Die Gewindebohrung 1 setzt sich an ihrem tiefsten Endpunkt in einer Fortsetzungsbohrung 3 fort, deren Innendurchmesser kleiner als der Innendurchmesser der Gewindebohrung 1 ausgeführt ist. Der Übergang 4 zwischen der Gewindebohrung 1 und der Fortsetzungsbohrung 3 weist ein konischen Verlauf auf.

Das Rückschlagventil 5 weist ein primär zylindrisches Ventilgehäuse 6 auf. Ungefähr im mittleren Drittel des Ventilgehäuses 6 - bei Betrachtungen des Ventilgehäuse 6 in axialer Richtung - besitzt das Ventilgehäuse 6 eine primär radial ausgerichtete Erweiterung 7. Diese primär radial ausgerichtete Erweiterung 7 unterteilt sich ungefähr zur Hälfte ihrer axialen Ausdehnung in einen ersten Zylinderabschnitt 8 und einen zweiten Zylinderabschnitt 9. Während der Außendurchmesser des ersten Zylinderabschnitts 8 dem Innendurchmesser der Gewindebohrung 1 entspricht, ist der Außendurchmesser des zweiten Zylinderabschnitts 9 geringer ausgeprägt.

Der erste Zylinderabschnitt 8 weist auf seiner äußeren Manteloberfläche 10 ein Außengewinde 11 auf, das in das Innengewinde 12 der Gewindebohrung 1 eingeschraubt ist. Das Innengewinde 12 ist dabei so weit in die Gewindebohrung 1 eingeschnitten, dass bei vollständiger Verschraubung des Rückschlagventils 5 in die Gewindebohrung 1 das Ventilgehäuses 6 des Rückschlagventils 5 mit seiner zwischen der vorderen Stirnfläche 13 und der zylindrischen Mantelfläche 14 befindlichen, Fasenkante 15 an den konischen Übergang 4 zwischen Gewindebohrung 1 und Fortsetzungsbohrung 3 gedrückt wird. Aufgrund dieses formschlüssigen Kontaktes zwischen dem Ventilgehäuse 6 und dem konischen Übergang 4 wird eine Strömung des Hydraulikfluid zwischen dem Ventilgehäuse 6 und dem konischen Übergang 4 verhindert.

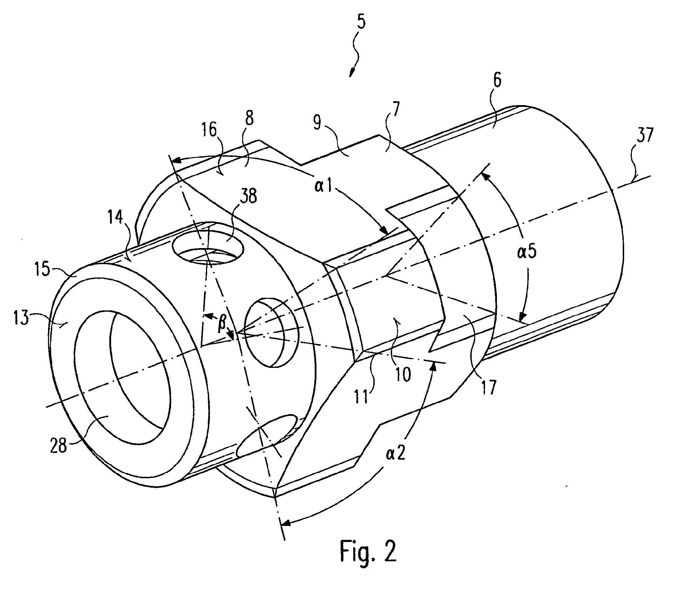

Im ersten Zylinderabschnitt 8 sind in zwei, drei oder vier gleich großen Winkelsegmenten α1, α2, α3 und α4 (in Fig. 2 ist die Ausführungsform mit drei gleich großen Winkelsegmenten α1, α2 und α3 dargestellt, wobei die Winkelsegment α3 und α4 in Fig. 2 aufgrund der perspektivischen Darstellung nicht zu erkennen sind), die in gleich großen Winkelabständen zueinander angeordnet sind, erste Abtragungen 16 an der äußeren Manteloberfläche 10 vorgesehen, die zu einer Einebnung der zylindrischen Manteloberfläche 10 in den Winkelsegmenten α1, α2, α3 und α4 führen. Auf diese Weise bildet jede erste Abtragung 16 einen Durchlaßkanal 39 für eine Hydraulikfluidströmung zwischen der Seitenfläche der Gewindebohrung 1 und der Fläche der Abtragung 16 des Ventilgehäuses 6.

Die ersten Abtragungen 16 in den Winkelsegmenten α1, α2, α3 und α4 sind in der gleichen Größenordnung in den zweiten Zylinderabschnitt 9 weitergeführt. In den zwischen den Winkelsegmenten α1, α2, α3 und α4 befindlichen gleich großen Winkelsegmenten α5, α6, α7 und α8 (in Fig. 2 ist nur die Ausführungsform mit drei Winkelsegmenten α5, α6 und α7 dargestellt, wobei die Winkelsegmente α6, α7 in Fig. 2 aufgrund der perspektivischen Darstellung nicht erkenntlich sind) sind im Zylinderabschnitt 9 zweite Abtragungen 17 vorgesehen, die in der gleichen Größenordnung wie die ersten Abtragungen 16 ausgeführt sind. Auf diese Weise besitzt das Querschnittsprofil des zweiten Zylinderabschnitts 9 ein Achtkantprofil. Da die Flächen dieser Abtragungen 16 einer Normgröße für die Anwendung eines 4-, 6-oder 8-kantförmigen Schraubwerkzeuges entsprechen, können sie als Angriffsflächen für ein 4-, 6-oder 8-kantförmiges Schraubwerkzeug zum Einschrauben des Rückschlagventil 5 in die Gewindebohrung 1 benutzt werden.

Das primär zylindrische Ventilgehäuse 6 im Rückschlagventil 5 weist eine axial gerichtete Ausnehmung 18 auf, die in einem ersten Abschnitt 19, der sich an dem zur Fortsetzungsbohrung 3 weisenden Ende des Ventilgehäuses 6 befindet, einen geringeren Innendurchmesser aufweist als in einem zweiten Abschnitt 20, der sich an dem im Bereich die Gewindebohrung 1 befindlichen Ende des Ventilgehäuses 6 befindet. Der konischen Übergang 40 zwischen dem kleineren Innendurchmesser des ersten Abschnitts 19 und dem größeren Innendurchmesser des zweiten Abschnitt 20 der Ausnehmung 18 dient als Ventilsitz 21.

An den Ventilsitz 21 wird ein im zweiten Abschnitt 20 befindlicher kugelförmiger Ventilkörper 22 gedrückt. Die für das Andrücken des Ventilkörpers 22 an den Ventilsitz 21 erforderliche Kraft wird zu einem gewissen Anteil durch die Federkraft einer zwischen einem ersten Federteller 23 und einem zweiten Federteller 24 vorgespannten Feder 25 erzeugt. Die Übertragung der Federkraft der vorgespannten Feder 25 auf den Ventilkörper 22 erfolgt über den ersten Federteller 23. Ein weiterer Anteil der für das Andrücken des Ventilkörpers 22 an den Ventilsitz 21 erforderlichen Kraft wird über die Druckdifferenz der ersten Druckseite der zweiten Druckseite 27 aufgebracht.

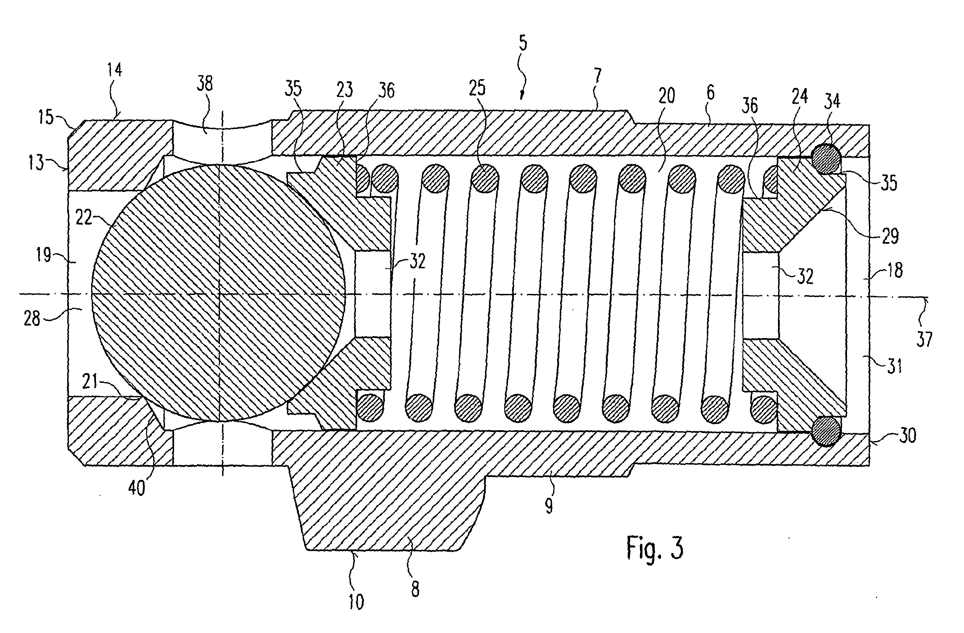

Damit die Druckdifferenz zwischen erster Druckseite 26 und zweiter Druckseite 27 am Ventilkörper 22 wirken kann, besitzt das Ventilgehäuse 6 an seiner zur ersten Druckseite 26 - zur Fortsetzungsbohrung 3 - weisenden Stirnfläche 13 eine erste Anströmöffnung 28. Über die erste Anströmöffnung 28 gelangt der in der ersten Druckseite 26 wirkende Druck an den innerhalb des ersten Abschnitts 19 befindlichen Flächenanteil 29 (gestrichelte Linie in Fig. 3) des Ventilkörpers 22.

Der zweite Federteller 24 stützt sich an einem Sprengring 34 ab, der in einer kreisringförmigen Nut an der Seitenfläche der Ausnehmung 18 im Bereich einer zweiten Öffnung 31 angebracht ist, die sich an einer zur zweiten Druckseite 37 weisenden Stirnfläche 30 des Ventilgehäuses 6 befindet. Um sich am Sprengring 34 abstützen zu können, besitzt der primär zylindrische zweite Federteller 24, der im Hinblick auf die Verwendung möglichst vieler Gleichteile in einer Baugruppe baugleich zum ersten Federteller 23 ausgeführt ist, an der Kante zwischen Mantelfläche und unterer Stirnfläche eine Einkerbung 35, die auch die Funktionssicherheit des belasteten Sprengringes gegen Herausfallen aus der Nut erhöht. Zur Fixierung der Feder 25 weist der erste und zweite Federteller 23 und 24 an der Kante zwischen Mantelfläche und oberer Stirnfläche eine kreisringförmige Einkerbung 36 auf. Der Federteller 23 und 24 besitzt einen konischen Übergang 29 von der unteren Stirnfläche zur Innenbohrung 32. Der konische Übergang 29 dient im Falle der Verwendung des Bauteils als erster Federteller 23 als Abstützfläche des ersten Federtellers 23 zum kugelförmigen Ventilkörper 22.

Im zweiten Abschnitt 20 der Ausnehmung 18 des Ventilgehäuses 6 sind im Bereich des Ventilkörpers 22 auf einer zur Längsachse 37 des Ventilgehäuses 6 konzentrischen Kreislinie auf der inneren Seitenfläche des Ventilgehäuses 6 mehrere in äquidistanten Winkelabschnitten β verteilte Durchgangsausnehmungen 38 angebracht, die in einem Bereich 39 münden, der sich zwischen dem Ventilgehäuse 6 und der Seitenwand der Gewindebohrung 1 auf der zur ersten Druckseite 26 weisenden Seite des ersten Zylinderabschnitts 18 befindet.

Ist der Druck des Hydraulikfluids in der ersten Druckseite 26 - in der Fortsetzungsbohrung 3 - größer als der Gegendruck, der sich aus dem Druck des Hydraulikfluids in der zweiten Druckseite 27 - in der Gewindebohrung 1 - und dem Druck der Federkraft der vorgespannten Feder 25 zusammensetzt, so hebt der Ventilkörper 22 von seinem Ventilsitz 21 ab und ermöglicht eine Strömung des Hydraulikfluids von der ersten Druckseite 26 - in der Fortsetzungsbohrung 3 - über einem Strömungskanal zwischen den Ventilkörper 22 und konischen Übergang 40 des Ventilgehäuses 6 und über die Durchgangsbohrungen 38 zum Bereich 39 in der Gewindebohrung 1. Vom Bereich 39 der Gewindebohrung 1 strömt das Hydraulikfluid über drei Durchlaßkanäle 39, die durch Abtragungen 16 des ersten Zylinderabschnitts 8 des Ventilgehäuses 6 gebildet sind, in die Gewindebohrung 1. Der Ventilsitz trennt die erste Druckseite 26 von der zweiten Druckseite 27.

## Patentansprüche

1. Hydraulische Baugruppe, in dessen Gehäuse (2) sich eine eine erste Druckseite (26) verkörpernde Fortsetzungsbohrung (3), eine eine zweite Druckseite (27) verkörpernde Gewindebohrung (1) und zwischen der ersten Druckseite (26) und der zweiten Druckseite (27) ein Rückschlagventil (5) mit einem in einem ersten Zylinderabschnitt (8) eines zylindrischen Ventilgehäuses (6) aufgebrachten, in die Gewindebohrung (1) einschraubbaren Außengewinde (11) befindet,
wobei ein Durchlaßkanal (39) für eine Hydraulikfluidströmung zwischen einer Seitenwand der Gewindebohrung (1) und einer ersten Abtragung (16) der Mantelfläche (10) des zylindrischen Ventilgehäuses (6) in mehreren gleich großen Winkelsegmenten (α1, α2, α3 und α4) des Ventilgehäuses (6) ausgebildet ist,
**dadurch gekennzeichnet,**
**dass** in einem an dem ersten Zylinderabschnitt (8) anschließenden zweiten Zylinderabschnitt (9) die gleich großen ersten Abtragungen (16) weitergeführt sind und diese mit mehreren zwischen den ersten Abtragungen (16) ausschließlich im zweiten Zylinderabschnitt (9) befindlichen gleich großen zweiten Abtragungen (17) als Eingriffe für ein Werkzeug zum Einschrauben des Rückschlagventils (5) in die Gewindebohrung (1) dienen.

2. Hydraulische Baugruppe nach Anspruch 1,
**dadurch gekennzeichnet,**
**dass** das zylindrische Ventilgehäuse (6) aus zwei, drei oder vier gleich großen ersten Abtragungen (16) besteht, die in äquidistanten Winkelabständen auf der Mantelfläche (10) des zylindrischen Ventilgehäuses (6) aufgebracht sind.

3. Hydraulische Baugruppe nach Anspruch 2,
**dadurch gekennzeichnet,**
**dass** im zweiten Zylinderabschnitt (9) die zwei, drei oder vier zu den ersten Abtragungen (16) gleich großen zweiten Abtragungen (17) in den Winkelsegmenten (α5, α6, α7 und α8) des Ventilgehäuses (6) ausgeführt sind.

4. Hydraulische Baugruppe nach Anspruch 3,
**dadurch gekennzeichnet,**
**dass** die ersten und zweiten Abtragungen (16, 17) Einebnungen darstellen und ein Vier-, Sechs- oder Achtkantprofil für ein Werkzeug zum Einschrauben des Rückschlagventils (5) in die Gewindebohrung (1) bilden.

5. Hydraulische Baugruppe nach einem der Ansprüche 1 bis 4,
**dadurch gekennzeichnet,**
**dass** die Gewindebohrung (1) auf der Höhe des zur ersten Druckseite (26) weisenden Endes des vollständig in die Gewindebohrung (1) eingeschraubten Ventilgehäuses (6) über einen Übergang (4) in eine Fortsetzungsbohrung (3) übergeht, deren Durchmesser geringer als der Durchmesser der Gewindebohrung (1) ausgeführt ist.

6. Hydraulische Baugruppe nach Anspruch 5,
**dadurch gekennzeichnet,**
**dass** der Übergang (4) einen konischen Verlauf aufweist.

7. Hydraulische Baugruppe nach Anspruch 5 oder 6,
**dadurch gekennzeichnet,**
**dass** die Hydraulikfluidströmung zwischen dem Ventilgehäuse (6) und dem Übergang (4) zwischen der Gewindebohrung (1) und der Fortsetzungsbohrung (3) dadurch unterbrochen ist, dass das Ventilgehäuse (6) an den Übergang (4) gedrückt ist.

8. Hydraulische Baugruppe nach einem der Ansprüche 1 bis 7,
**dadurch gekennzeichnet,**
**dass** das Rückschlagventil (5) einen Ventilsitz (21) enthält, der durch einen konischen Übergang (40) von einem ersten Abschnitt (19) mit kleinerem Innendurchmesser zu einem zweiten Abschnitt (20) mit größerem Innendurchmesser einer Ausnehmung (18) des hohlzylindrischen Rückschlagventils (5) gebildet ist.

9. Hydraulische Baugruppe nach Anspruch 8,
**dadurch gekennzeichnet,**
**dass** der erste Abschnitt (19) der Ausnehmung (18) eine erste Anströmöffnung (28) des Rückschlagventils (5) bildet.

10. Hydraulische Baugruppe nach Anspruch 9,
**dadurch gekennzeichnet,**
**dass** das Rückschlagventil (5) an dem der ersten Anströmöffnung (28) gegenüberliegenden Ende des Ventilgehäuses (6) eine zweite Öffnung (31) aufweist.

11. Hydraulische Baugruppe nach Anspruch 10,
**dadurch gekennzeichnet,**
**dass** der zweite Abschnitt (20) der Ausnehmung (18) einen kugelförmigen Ventilkörper (22) enthält, der durch die Federkraft einer vorgespannten, ebenfalls im zweiten Abschnitt (20) der Ausnehmung (18) befindlichen Feder (25) und die Druckdifferenz zwischen dem an der zweiten Öffnung (31) herrschenden Druck und dem an der ersten Anströmöffnung (28) herrschenden Druck an den Ventilsitz (21) gedrückt wird.

12. Hydraulische Baugruppe nach einem der Ansprüche 8 bis 11,
**dadurch gekennzeichnet,**
**dass** das hohlzylindrische Rückschlagventil (5) im zweiten Abschnitt (20) der Ausnehmung (18) mehrere in äqidistanten Winkelabschnitten (β) auf einer zur Längsachse (37) des Rückschlagventils (5) konzentrischen Kreislinie auf der inneren Seitenfläche des Ventilgehäuses (6) verteilte Durchgangsausnehmungen (38) aufweist, die in einem Bereich (39) der zweiten Druckseite (27) der Gewindebohrung (1) mündet, der sich an der zur ersten Druckseite (26) weisenden Seite des ersten Zylinderabschnitt (8) befindet.

13. Hydraulische Baugruppe nach Anspruch 11,
**dadurch gekennzeichnet,**
**dass** die Feder (25) zwischen einem ersten und zweiten Federteller (23, 24) vorgespannt ist.

14. Hydraulische Baugruppe nach Anspruch 13,
**dadurch gekennzeichnet,**
**dass** der erste und zweite Federteller (23, 24) die gleiche Geometrie aufweisen.

15. Hydraulische Baugruppe nach Anspruch 13 oder 14,
**dadurch gekennzeichnet,**
**dass** die Federkraft der vorgespannten Feder (25) über den ersten Federteller (23) auf den Ventilkörper (22) übertragen wird.

16. Hydraulische Baugruppe nach einem der Ansprüche 13 bis 15,
**dadurch gekennzeichnet,**
**dass** sich der zweite Federteller (24) gegen einen in einer kreisringförmigen Nut an der inneren Seitenfläche des hohlzylindrischen Ventilgehäuses (6) geführten Sprengring (34) abstützt.

17. Hydraulische Baugruppe nach einem der Ansprüche 13 bis 16,
**dadurch gekennzeichnet,**
**dass** der erste und zweite Federteller (23, 24) zur Zuführung des an der zweiten Öffnung (31) herrschenden Druckes an den Ventilkörper (22) jeweils eine Innenbohrung (32) aufweist.

## Claims

1. Hydraulic assembly, situated in the housing (2) of which are a continuation bore (3) embodying a first pressure side (26), a threaded bore (1) embodying a second pressure side (27), and between the first pressure side (26) and the second pressure side (27), a nonreturn valve (5) having an external thread (11) which is formed on a first cylindrical portion (8) of a cylindrical valve housing (6) and can be screwed into the threaded bore (1),
a passage duct (39) for a hydraulic fluid flow being formed, between a side wall of the threaded bore (1) and a first region of material removal (16) of the lateral surface (10) of the cylindrical valve housing (6), in a plurality of equal-sized angular segments (α1, α2, α3 and α4) of the valve housing (6),
**characterised**
**in that** the equal-sized first regions of material removal (16) are continued in a second cylindrical portion (9) adjoining the first cylindrical portion (8) and serve, with a plurality of equal-sized second regions of material removal (17) situated between the first regions of material removal (16) exclusively in the second cylindrical portion (9), as engagements for a tool for screwing the nonreturn valve (5) into the threaded bore (1).

2. Hydraulic assembly according to Claim 1,
**characterised**
**in that** the cylindrical valve housing (6) comprises two, three or four equal-sized first regions of material removal (16) formed at equidistant angular intervals on the lateral surface (10) of the cylindrical valve housing (6).

3. Hydraulic assembly according to Claim 2,
**characterised**
**in that** in the second cylindrical portion (9) the two, three or four second regions of material removal (17), which are equal in size to the first regions of material removal (16) are constructed in the angular segments (α5, α6, α7 and α8) of the valve housing (6).

4. Hydraulic assembly according to Claim 3,
**characterised**
**in that** the first and second regions of material removal (16, 17) constitute levelled regions and form a square, hexagonal or octagonal profile for a tool for screwing the nonreturn valve (5) into the threaded bore (1).

5. Hydraulic assembly according to one of Claims 1 to 4,
**characterised**
**in that** the threaded bore (1) merges, at the level of the end, facing towards the first pressure side (26), of the valve housing (6) screwed fully into the threaded bore (1), via a transition (4) into a continuation bore (3), the diameter of which is designed smaller than the diameter of the threaded bore (1).

6. Hydraulic assembly according to Claim 5,
**characterised**
**in that** the transition (4) has a conical form.

7. Hydraulic assembly according to Claim 5 or 6,
**characterised**
**in that** the hydraulic fluid flow between the valve housing (6) and the transition (4) between the threaded bore (1) and the continuation bore (3) is interrupted by the valve housing (6) pressing against the transition (4).

8. Hydraulic assembly according to one of Claims 1 to 7,
**characterised**
**in that** the nonreturn valve (5) contains a valve seat (21) which is formed by a conical transition (40) from a first portion (19) of smaller inside diameter to a second portion (20) of larger inside diameter of a cutout (18) of the hollow-cylindrical nonreturn valve (5).

9. Hydraulic assembly according to Claim 8,
**characterised**
**in that** the first portion (19) of the cutout (18) forms a first inflow opening (28) of the nonreturn valve (5).

10. Hydraulic assembly according to Claim 9,
**characterised**
**in that** the nonreturn valve (5) has a second opening (31) at the end of the valve housing (6) opposite the first inflow opening (28).

11. Hydraulic assembly according to Claim 10,
**characterised**
**in that** the second portion (20) of the cutout (18) contains a spherical valve body (22) which is pressed against the valve seat (21) by the spring force of a prestressed spring (25) likewise situated in the second portion (20) of the cutout (18) and the pressure difference between the pressure prevailing at the second opening (31) and the pressure prevailing at the first inflow opening (28).

12. Hydraulic assembly according to one of Claims 8 to 11,
**characterised**
**in that** the hollow-cylindrical nonreturn valve (5) has in the second portion (20) of the cutout (18) a plurality of through-openings (38) which are distributed in equidistant angular segments (β) on a circular line which is concentric with the longitudinal axis (37) of the nonreturn valve (5) and lies on the inner lateral surface of the valve housing (6), these through-openings opening into a region (39) of the second pressure side (27) of the threaded bore (1), which region is situated on the side of the first cylindrical portion (8) facing towards the first pressure side (26).

13. Hydraulic assembly according to Claim 11,
**characterised**
**in that** the spring (25) is prestressed between a first and second spring plate (23, 24).

14. Hydraulic assembly according to Claim 13,
**characterised**
**in that** the first and second spring plate (23, 24) have the same geometry.

15. Hydraulic assembly according to Claim 13 or 14,
**characterised**
**in that** the spring force of the prestressed spring (25) is transmitted to the valve body (22) via the first spring plate (23).

16. Hydraulic assembly according to one of Claims 13 to 15,
**characterised**
**in that** the second spring plate (24) is supported against a snap ring (34) guided in an annular groove at the inner lateral surface of the hollow-cylindrical valve housing (6).

17. Hydraulic assembly according to one of Claims 13 to 16,
**characterised**
**in that** the first and second spring plate (23, 24) each has an inner bore (32) for supplying the pressure prevailing at the second opening (31) to the valve body (22).

## Revendications

1. Groupe structurel hydraulique dans le boîtier (2) duquel se trouvent un alésage de prolongement (3) matérialisant un premier côté pression (26), un trou taraudé (1) matérialisant un second côté pression (27) et, entre le premier côté pression (26) et le second côté pression (27), un clapet antiretour (5) muni d'un filetage extérieur (11) qui est façonné dans un premier tronçon cylindrique (8) d'un carter cylindrique (6) dudit clapet, et peut être vissé dans ledit trou taraudé (1),
sachant qu'un canal (39) de circulation d'un écoulement de fluide hydraulique est pratiqué entre une paroi latérale du trou taraudé (1) et une première dépouille (16) de la surface (10) de l'enveloppe du carter cylindrique (6) dudit clapet, dans plusieurs segments angulaires (α1, α2, α3 et α4) dudit carter (6) du clapet qui possèdent un même dimensionnement,
**caractérisé par le fait**
**que** les premières dépouilles (16) de même dimensionnement fusionnent dans un second tronçon cylindrique (9) attenant au premier tronçon cylindrique (8), et servent, en association avec plusieurs secondes dépouilles (17) de même dimensionnement situées entre lesdites premières dépouilles (16), exclusivement dans ledit second tronçon cylindrique (9), de configurations de venue en prise d'un outil affecté au vissage du clapet antiretour (5) dans le trou taraudé (1).

2. Groupe structurel hydraulique selon la revendication 1,
**caractérisé par le fait**
**que** le carter cylindrique (6) du clapet est constitué de deux, trois ou quatre premières dépouilles (16) de même dimensionnement façonnées, à espacements angulaires équidistants, sur la surface (10) de l'enveloppe dudit carter cylindrique (6) dudit clapet.

3. Groupe structurel hydraulique selon la revendication 2,
**caractérisé par le fait**
**que** le second tronçon cylindrique (9) comporte les deux, trois ou quatre secondes dépouilles (17) dont le dimensionnement est identique à celui des premières dépouilles (16), et qui sont pratiquées dans les segments angulaires (α5, α6, α7 et α8) du carter (6) du clapet.

4. Groupe structurel hydraulique selon la revendication 3,
**caractérisé par le fait**
**que** les premières et secondes dépouilles (16, 17) représentent des régions aplanies et matérialisent un profil à quatre, six ou huit pans, destiné à un outil affecté au vissage du clapet antiretour (5) dans le trou taraudé (1).

5. Groupe structurel hydraulique selon l'une des revendications 1 à 4,
**caractérisé par le fait**
**que** le trou taraudé (1) fusionne à la hauteur de l'extrémité, tournée vers le premier côté pression (26), du carter (6) du clapet intégralement vissé dans ledit trou taraudé (1), par l'intermédiaire d'une transition (4), dans un alésage de prolongement (3) dont le diamètre est conçu plus petit que le diamètre dudit trou taraudé (1).

6. Groupe structurel hydraulique selon la revendication 5,
**caractérisé par le fait**
**que** la transition (4) possède une allure conique.

7. Groupe structurel hydraulique selon la revendication 5 ou 6,
**caractérisé par le fait**
**que** l'écoulement de fluide hydraulique, entre le carter (6) du clapet et la transition (4) entre le trou taraudé (1) et l'alésage de prolongement (3), est interrompu en pressant ledit carter (6) dudit clapet contre ladite transition (4).

8. Groupe structurel hydraulique selon l'une des revendications 1 à 7,
**caractérisé par le fait**
**que** le clapet antiretour (5) renferme un siège d'obturation (21) formé par une transition conique (40) entre un premier tronçon (19), de diamètre intérieur inférieur, et un second tronçon (20), de plus grand diamètre intérieur, d'un évidement (18) dudit clapet antiretour (5) cylindrique creux.

9. Groupe structurel hydraulique selon la revendication 8,
**caractérisé par le fait**
**que** le premier tronçon (19) de l'évidement (18) matérialise un premier orifice d'afflux (28) du clapet antiretour (5).

10. Groupe structurel hydraulique selon la revendication 9,
**caractérisé par le fait**
**que** le clapet antiretour (5) comporte un second orifice (31) à l'extrémité du carter (6) dudit clapet qui est opposée au premier orifice d'afflux (28).

11. Groupe structurel hydraulique selon la revendication 10,
**caractérisé par le fait**
**que** le second tronçon (20) de l'évidement (18) renferme un corps obturateur sphérique (22) qui est poussé contre le siège d'obturation (21) par la force élastique d'un ressort précontraint (25), semblablement logé dans le second tronçon (20) dudit évidement (18), et par la différence entre la pression régnant au niveau du second orifice (31), et la pression régnant au niveau du premier orifice d'afflux (28).

12. Groupe structurel hydraulique selon l'une des revendications 8 à 11,
**caractérisé par le fait**
**que** le clapet antiretour (5) cylindrique creux comporte, dans le second tronçon (20) de l'évidement (18), plusieurs évidements de passage (38) répartis sur la surface latérale intérieure du carter (6) dudit clapet, dans des tronçons angulaires équidistants (β), sur une ligne circulaire concentrique à l'axe longitudinal (37) dudit clapet antiretour (5), et débouchant dans une région (39) du second côté pression (27) du trou taraudé (1), qui est située du côté du premier tronçon cylindrique (8) orienté vers le premier côté pression (26).

13. Groupe structurel hydraulique selon la revendication 11,
**caractérisé par le fait**
**que** le ressort (25) est précontraint entre des première et seconde cuvettes (23, 24).

14. Groupe structurel hydraulique selon la revendication 13,
**caractérisé par le fait**
**que** les première et seconde cuvettes (23, 24) du ressort présentent la même géométrie.

15. Groupe structurel hydraulique selon la revendication 13 ou 14,
**caractérisé par le fait**
**que** la force élastique du ressort précontraint (25) est répercutée sur le corps obturateur (22) par l'intermédiaire de la première cuvette (23) dudit ressort.

16. Groupe structurel hydraulique selon l'une des revendications 13 à 15,
**caractérisé par le fait**
**que** la seconde cuvette (24) du ressort prend appui contre une bague fendue (34) mobile dans une rainure en forme d'anneau circulaire, sur la surface latérale intérieure du carter cylindrique creux (6) du clapet.

17. Groupe structurel hydraulique selon l'une des revendications 13 à 16,
**caractérisé par le fait**
**que** les première et seconde cuvettes (23, 24) du ressort sont respectivement munies d'un alésage intérieur (32) en vue de transmettre, au corps obturateur (22), la pression régnant au niveau du second orifice (31).
